# EUROPEAN PATENT APPLICATION

(11) **EP 2 458 391 A1**
(43) Date of publication of application: **30.05.2012**
(21) Application number: 10193025.3
(22) Date of filing: 29.11.2010
(51) Int. Cl.: G01Q 60/02, G01Q 60/40, G01Q 60/60

(54) **AFM-SECM sensor**

(71) Applicant: Technische Universität Wien, 1040 Wien (AT); Technische Universität Graz, 8010 Graz (AT); CEST Kompetenzzentrum für Elektrochemische Oberflächentechnologie GmbH, 2700 Wiener Neustadt (AT)
(72) Inventor: Avdic, Amra, 1150, Vienna (AT); Lugstein, Alois, 2380, Perchtoldsdorf (AT)
(74) Representative: Sonn & Partner Patentanwälte

(57) **Abstract**

The invention discloses an atomic force microscopy-scanning electrochemical microscopy (AFM-SECM) sensor comprising
- an AFM tip on an AFM cantilever,
- with a conductive layer on the AFM tip which forms a conductive AFM tip and wherein said conductive tip is connected to a contact region on the cantilever, said contact region providing the contact site for delivering the measurement signal to the AFM microscope,
- wherein said conductive layer is covered by an insulating layer except for the immediate tip and the contact site,
- wherein said insulating layer is covered by a conductive protection layer, and
- wherein, due to a cavity between the conductive protection layer and the conductive AFM tip, said cavity being formed by the absence or by removal of a tip located portion of the insulating layer, the region of the conductive AFM tip forms a ring electrode with the conductive protection layer, and methods for producing such sensors.

## Description

The invention relates to scanning electrochemical microscopy (SECM).

The multifunctional scanning probe microscopy (SPM) has gained great importance in the surface characterization of a variety of samples. Atomic Force Microscopy (AFM) is among the most used SPM techniques because of its broad applicability and possible integration of additional functionalities such as scanning near field optical microscopy, Scanning Electrochemical Microscopy (SECM), or Current-Sensing (CS).

SECM is a powerful technique for obtaining in-situ information on a wide range of processes occurring at interfaces. It is based on the measurement of a diffusion-limited current due to the oxidation/reduction of a redox active species present in the electrolyte solution at an ultra-microelectrode (UME). The diffusion-limited current of an UME in the bulk of solution is determined by the hemispherical diffusion of the reactant to the probe. Upon approach to the surface, the electrochemical current measured at the UME either decreases due to the screening of diffusion to the electrode (negative feedback) or increases due to the regeneration of the initial redox species at the sample (positive feedback).

Still, a major drawback of this technique is the difficulty in obtaining electrochemical images with a lateral resolution comparable to AFM or scanning tunneling microscopy as a result of signal-dependent positioning of the UME in common operation modes in which the UME is scanned over the sample at a constant height. The other approach, named constant current mode, uses a closed-loop electronic and mechanical servosystem to maintain the tip current constant by varying the distance between tip and sample. The major drawback of this method is that for a mixed substrate consisting of conductive and insulating domains, the servosystem must have information about the type of surface the tip is over.

As it is essential to precisely control the distance between the scanning nanoelectrode and the sample surface the combination of the AFM-SECM is an attractive technique for simultaneous high resolution topographical and electrochemical imaging. Here the distance between the electrode and the surface can be precisely controlled via feedback mechanism of AFM. The same approach is used in CS-AFM; the only difference is that in the latter case the measured current is due to the electron transport.

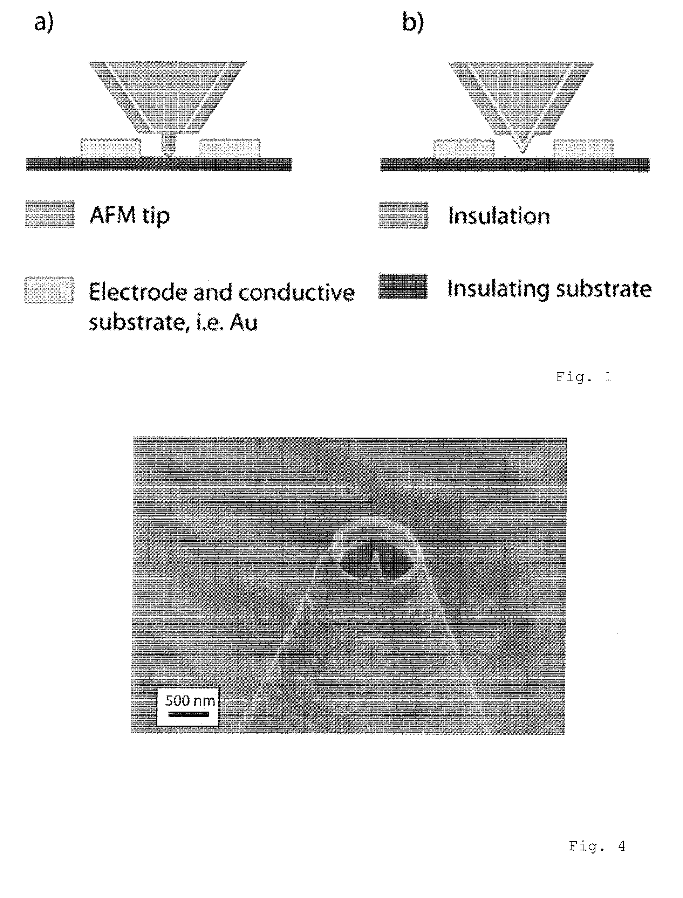

By now two main approaches for the integration of the SECM functionality into AFM tips have been explored. The first one is the AFM-SECM tip with an electrode integrated at a defined distance to the apex of the tip, thereby controlling the distance to the sample surface (Figure 1a). The other one is a cone shaped AFM probe, completely insulated except for a small part at the apex of the tip (Figure 1b). The second approach requires a precise control of the working distance between the sample and the tip using the AFM feedback loop. However an advantage is that the electrochemical information corresponds directly to the local morphology where the conductive tip works as an electrode and AFM simultaneously. Further, this type of probes can be also used in CS-AFM mode.

It is an object of the present invention to provide a device wherein micro- and nanoelectrodes are reproducibly integrated into AFM tips. Preferably, such devices should be producible by utilizing well known microfabrication techniques enabling batch processing.

Therefore, the present invention provides an atomic force microscopy-scanning electrochemical microscopy (AFM-SECM) sensor comprising
- an AFM tip on an AFM cantilever,
- with a conductive layer on the AFM tip which forms a conductive AFM tip and wherein said conductive tip is connected to a contact region on the cantilever, said contact region providing the contact site for delivering the measurement signal from the conductive AFM tip to the AFM microscope,
- wherein said conductive layer is covered by an insulating layer except for the immediate tip and the contact site,
- wherein said insulating layer is covered by a conductive protection layer, and
- wherein, due to a cavity between the conductive protection layer and the conductive AFM tip, said cavity being formed by the absence or by removal of a tip located portion of the insulating layer, the region of the conductive AFM tip forms a ring electrode with the conductive protection layer.

As already stated, it is essential for the Scanning Electrochemical Microscopy (SECM) measurements that the distance between the electrode and the surface is constant during the measurement. The resolution depends on the electrode radius as well as on the distance between the scanned surface and the electrode. Therefore the combination of the Atomic Force Microscopy (AFM)-SECM is an attractive technique for simultaneous high resolution topographical and electrochemical imaging. According to the present invention, the distance between the electrode and the surface can be precisely controlled. In order to use the conductive AFM tip for the combined AFM-SECM measurements it is mandatory to insulate the whole AFM-SECM sensor chip except of the small area at the apex of the tip and the contact area at the end of the sensor. The present invention enables the reliable removal of the insulation from the apex of the tip thereby retaining the original shape of the conductive AFM tip (e.g. of gold and boron doped diamond).

Preferably, the AFM-SECM sensor according to the present invention exhibits a cavity or hollow space which is located between said conductive AFM tip and said conductive protection layer wherein said conductive AFM tip and said conductive protection layer are not separated by said insulating layer but by this cavity within a region of 30 nm to 3.5 µm from the immediate tip. This cavity forms - together with the outer ring of the conductive protection layer and the inner conductive AFM tip a ring electrode.

According to another aspect, the present invention provides an atomic force microscopy-scanning electrochemical microscopy (AFM-SECM) sensor comprising
- an AFM tip on an AFM cantilever,
- with a conductive layer on the AFM tip which forms a conductive AFM tip and wherein said conductive tip is connected to a contact region on the cantilever, said contact region providing the contact site for delivering the measurement signal from the conductive AFM tip to the AFM microscope,
- wherein said conductive layer is covered by an insulating layer except for the immediate tip and the contact site.

Preferably, the AFM-SECM sensors according to the present invention exhibit a distance between said conductive AFM tip and said conductive protection layer of from 5 nm to 2 µm. This is the distance that may be left or may be generated due to the controlled removal of the insulating layer.

The protective (or: protection) layer is a layer which has a protective characteristic vis-à-vis the insulating (or: insulation) layer (and, optionally, in addition to the conductive inner layer and the cantilever). This means that the insulating layer must have a higher tendency to be degraded than the protection layer with respect to the degrading technique chosen for degradation of the insulating layer. For example, a preferred embodiment of processing the insulating layer is etching. Accordingly, the protection layer must have a lower degradability for the specific etching process chosen for partially eliminating the insulating layer than the insulating layer. Preferably, the protection layer shows no or almost no degradation during processing the insulating layer, i.e. when the insulating layer is partially removed. "Partial" removal is the desired amount of removal which can be predetermined according to the controllability of the degradation (removal) process chosen for the insulating layer.

On the other hand, according to one embodiment (i.e. the embodiment wherein the final sensor does not exhibit a protection layer), the protection layer is preferably also a layer which can easily be removed. In such a case, the sensor has the insulating layer at least on the major part of the outside surface of the sensor.

The inner conductive layer can completely cover the cantilever or cover only parts of it. If it covers only parts of it, it nevertheless has to be safeguarded that the conductive layer enables conductivity from the conductive AFM tip to the part of the sensor which contacts the measurement or signalling processing part of the AFM-SECM instrument. Only then appropriate delivery of the measurement signal allows proper processing of the signal by the instrument.

Accordingly, preferred protection layers are made of or consist of Cr, Ni, Au, Pt, Ag, photoresists, Cu, diamond, Ge, Si, Al, SiO₂, Si₃N₄, Si-undoped, Al₂O₃, HfO₂, ZrO₂, glass, electrophoretic paint or TiO₂; the same materials can (with the exception of photoresists) also be used as preferred conductive protection layers (especially conductive protection layers which are made of or consist of Cr, Ni, Au, Pt, Ag, Cu, diamond, Ge, Si, Al, SiO₂, Si₃N₄, Al₂O₃, HfO₂, ZrO₂, glass, electrophoretic paint or TiO₂; however, materials, such as Si, Ge and diamond, are doped (if they are used as conductive protection layers to increase conductivity.

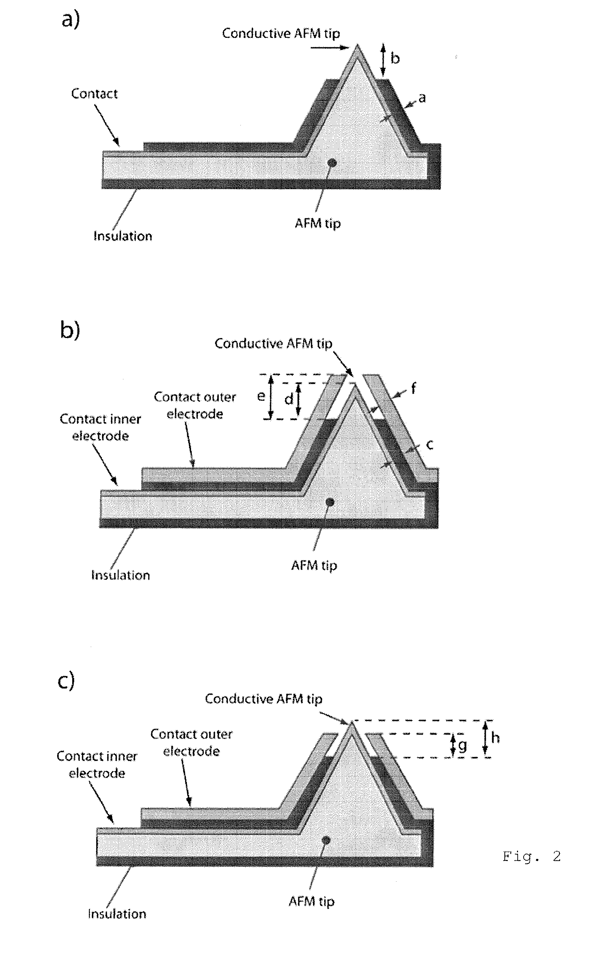

The general dimensions of the AFM-SECM sensor according to the present invention are those common to AFM cantilevers (AFM tips); the specific dimensions of the sensors according to the present invention can be adjusted according to the needed capabilities of the sensors. Typical dimensions of the present sensors which have proven to be advantageous are - in the schematic representation of Fig. 2 and independently from each other:
a - thickness of the insulating layer: 5 nm to 2 µm, preferably 100 nm to 1 µm, especially about 600 nm;
b - vertical extension of the top of the tip to the start of the insulating layer: 20 nm to 3 µm, preferably 100 nm to 1 µm, especially about 200 nm;
c - breadth or diameter of the cavity between the conductive layer and the protection layer in the ring electrode: 5 nm to 5 µm, preferably 100 nm to 1 µm, especially about 600 nm;
d - vertical extension of the top of the tip to the start of the insulating layer in the ring electrode (especially when the top of the tip is at about the same vertical level or vertically less extended than the protection layer (Figure 2b)): 20 nm to 3 µm, preferably 100 nm to 1 µm, especially about 200 nm;
e - vertical extension of the top of the protection layer to the start of the insulating layer in the ring electrode (especially when the top of the tip is at about the same vertical level or vertically less extended than the protection layer (Figure 2b)): 30 nm to 3.5 µm, preferably 100 nm to 1 µm, especially about 300 nm;
f - thickness of the protection layer: 10 nm to 1 µm, preferably 100 to 500 nm, especially about 100 nm;
g - vertical extension of the top of the tip to the start of the insulating layer in the ring electrode (especially when the top of the tip is at about the same vertical level or vertically even more extended than the protection layer (Figure 2c)): 20 nm to 3 µm, preferably 50 to 500 nm, especially about 100 nm;
h - vertical extension of the top of the tip to the start of the insulating layer in the ring electrode (especially when the top of the tip is at about the same vertical level or vertically even more extended than the protection layer (Figure 2c)): 30 nm to 3.5 µm, preferably 100 nm to 1 µm, especially about 200 nm.

"Vertical extension" is the extension along the axis of the AFM tip, i.e. vertically from the cantilever to the top of the tip towards the region which comes closest to the subject or sample which is analysed with this measuring technique.

Accordingly, the AFM-SECM sensor according to the present invention has a conductive AFM tip region with a vertical extension of 20 nm to 3 µm (b in Fig. 2a).

Preferably, the insulating layer of the sensor has a thickness of 5 nm to 2 µm. The insulating layer insulates the main area of the cantilever so that the conductive inner layer is insulated from the outer environment, especially the sample environment, to the extent that measurement is possible, i.e. by having only the AFM tip (the region where the sample is measured) and (for delivering the signals to the instrument) a contact region to the (signal receiving part of the) instrument not insulated from conductivity from the outside.

Preferably, the AFM-SECM sensor according to the present invention is characterised in that said insulating layer comprises or consists of SiO₂, Si₃N₄, diamond, Si-undoped, Ge-undoped, Al₂O₃, HfO₂, ZrO₂, glass, synthetic non-conductive oxide- or nitride layer material, electrophoretic paint or TiO₂, especially Si₃N₄. The insulating layer must, of course have sufficient insulating capacity to allow a proper measurement of the surface to be analysed with the AFM-SECM sensor. However, those materials which have suitable resistance to some degradation processes (e.g. to specific etching techniques) can also serve as protection layers. For example, SiO₂ can be used as protection layer and HfO₂ as insulating layer, if a given etching technique has high selectivity to SiO₂, and vice versa (for etching techniques with other selectivities).

The cavity which is formed in the ring sensor embodiment of the present invention between the inner conductive layer and the conductive protection layer (in this embodiment, of course the protection layer has to be conductive; in those embodiments, where no ring electrode is formed or where the protection layer is finally removed, a conductivity is not necessary) preferably has a vertical extension of 20 nm to 3 µm (i.e. the dimensions of the insulating layer which is not present due to e.g. removal (e.g. by etching, especially RIE)).

The present invention also relates to a method for the production of AFM-SECM sensors according to the present invention, especially the ring sensor embodiment, which method is characterised by the following steps:
- providing an AFM cantilever with an AFM tip,
- covering the AFM cantilever with an AFM tip with a conductive layer,
- covering the AFM cantilever with an AFM tip covered with the conductive layer with an insulating layer except for the immediate tip and a contact site,
- covering the insulating layer with a protection layer, preferably a conductive protection layer,
- removing the insulating layer and the protection layer from the apex of the AFM tip,
- selectively removing a portion of the insulating layer at the immediate tip, and
- optionally removing the protection layer.

Preferably, removing part of the insulating layer and the conductive protection layer from the apex of the AFM tip is performed by focused ion beam (FIB) cutting. According to a preferred embodiment of this method, the selectively removing a portion of the insulating layer at the immediate tip is performed by etching, especially by reactive ion etching (RIE).

In a preferred embodiment, the conductive layer on the AFM tip (and the AFM cantilever) which forms a conductive AFM tip comprises boron-doped diamond (BDD) or Au.

In order to improve adhesion of the layers, the method of the present invention is preferably performed by applying adhesion layers. Preferably, an adhesion layer is provided between the cantilever and the conductive layer and/or between the conductive layer and the insulating layer and/or between the insulating layer and the protection layer. Specifically preferred adhesion layers comprise or consist of Ti or Cr.

A preferred embodiment of the present invention is as follows: After the probe is insulated by an insulation layer (e.g. a Si₃N₄ insulation layer) a protection layer (e.g. a sacrificial Cr layer) is deposited on the probe. The protection/sacrificial layer is partially removed from the tip apex (e.g. by using Focused Ion Beam (FIB)) to expose the insulation layer, which is subsequently (partially) removed, for example etched by Reactive Ion Etching (RIE), thus revealing the electroactive area. After the tip exposure, the protection layer (e.g. the Cr layer) is removed.

Preferred conductive material for the conductive layer can be selected from carbon, carbon electrode-glassy carbon, highly-ordered pyrolytic graphite, polysilicon, doped polysilicon, metal nitrides, silicides, metal or metal alloys, in particular gold, silver, platinum, palladium, tungsten, cadmium, aluminium, rhodium, iridium, copper, mercury alloys, platinum-iridium-alloy, platinum-rhodium-alloy, in particular TiN or TaN, tungsten silicide or tantalum silicide.

The provision of the layers, especially the conductive layer(s), according to the present invention can be made with any technique applied by persons skilled in the art in this field, for example sputtering and evaporation (especially ion sputtering and electron sputtering), chemical vapour deposition process, electroless plating, electroplating, a liquid phase deposition process or a spincoating method

Specifically the insulating layers may be applied e.g. by deposition from the gas phase, preferably by a plasma-supported CVD process, sputtering and evaporation (especially ion sputtering and electron sputtering), electroless plating, electroplating, application of insulating polymer layers, liquid phase deposition processes and spincoating methods.

Partial removal of the insulating layer is preferably effected by a technique which is easily controllable and direct-able to the predetermined dimensions, especially with respect to the dimensions of the cavity of the ring electrode. Accordingly, RIE is the most preferred method, because it allows appropriate control of the removal and the extent to which the insulating layer is removed. Alternatively, the removal of the insulating layer can also be effected by a focussed ion beam or by a neutral particle beam, by an alternative etching process (e.g. wet chemical etching), by laser or by focussed electromagnetic waves.

The AFM-SECM sensor according to the present invention, especially the ring electrode, can be applied in a variety of different measurement techniques. Preferred uses are the following:
- Focusing of the diffusion field around the tip by pulsing the ring on and off so that it does not consume everything around the tip.
- The tip generates a species which interacts with the substrate while the ring could detect a product of the reaction at the substrate solution interface. For example if a fuel cell catalyst is probed, O₂ can be generated at the tip and H₂O₂ can be detected at the ring.
- The solution trapped between the ring and the tip can be considered as a mini thin layer cell which can be used to enhance the tip current by positive feedback. A species generated by the substrate in very low concentration can be detected at the tip by e.g. oxidation. Provided it can be reduced at the ring, then feedback between tip and ring enhances the current and improves detection.
- Nano-electrochemical cell integrated in the tip: tip-generator cylinder-collector mode or in positive feedback mode between tip and cylinder.
- Vacuum gauge with the lateral resolution < 1µm.
- Scanning Microwave microscopy.

The present invention is further illustrated by the following examples and the drawing figures, yet, of course, without being limited thereto.
Fig. 1 shows a schematic representation of two types of integrated AFM-SECM sensors known in the prior art: a) Recessed frame electrode, with a constant distance to the surface; b) cone shaped electrode with conductive tip; the tip serves at the same time as the AFM and SECM electrode;
Fig. 2 shows three possible forms of the AFM-SECM tip according to the present invention: a) the AFM tip completely insulated except for a small part at the apex of the tip and the contact area; b) the ring electrode as a spacer between the tip and sample; c) the tip in contact with the sample. The tip is insulated from the ring electrode; the distance between the electrodes is defined by the thickness of the insulation layer; the design enables separate contacts for both electrodes for both a) and b) case;
Fig. 3 shows the process flow chart for AFM-SECM sensor fabrication showing the schematic view (left) and corresponding SEM images (right) of the Au coated AFM tip: (a) AFM tip coated with 600 nm insulation layer and a 50 nm protection layer; (b) FIB cut of the excess insulation from the apex of the tip leaving a thin insulation layer above the unexposed conductive area; (c) removal of the insulation layer via ICP-RIE exposing the conductive tip with the free standing protection layer; (d) the AFM-SECM tip after the removal of the Cr layer by wet etching;
Fig. 4 shows a SEM image of the Au ring-Au tip electrode according to the present invention;
Fig. 5 shows the cyclic voltammetry response of conical probes: (a) Au-coated (inset) in 1 mm FcMeOH + 0.1 M H₂SO₄, potential sweep rate 50 mV/s; (b) BDD-coated (inset) in 1 mM FcMeOH + 0.1M KNO₃, potential sweep rate 10 mV/s; and
Fig. 6 shows (a) a SEM image of the BDD coated AFM-SECM tip; (b) the corresponding EDX spectrum; the red colour represents carbon spectra and blue and green represent Si and Si₃N₄ spectrum, respectively.

### Examples:

### 1.: Production of an AFM-SECM device according to the present invention: Fabrication of Boron Doped Diamond and Au cone shaped nanoelectrodes for simultaneous AFM and SECM imaging

A reliable fabrication method for the highly reproducible integration of the SECM function into AFM probes was explored for the production of the AFM-SECM devices according to the present invention. This method is based on the standard semiconductor processing techniques combined with the Focused Ion Beam (FIB) machining. With the present example, a reliable microfabrication process for a combined AFM and SECM measurement tool is demonstrated. Such integrated cone shaped sensors with both, boron-doped diamond (BDD) or gold (Au) electrodes are fabricated using commercially available AFM probes. The sensor formation process is based on mature semiconductor processing techniques, including focused ion beam (FIB) machining, and highly selective Reactive Ion Etching (RIE). The fabrication approach preserves the geometry of the original conductive AFM tips resulting in well reproducible nanoscaled sensors. The feasibility and functionality of the fully featured tip is demonstrated by a cyclic voltammetry showing good agreement between measured and calculated values of the cone shaped SECM electrode.

The schematic representation of the modified AFM sensor can be seen in Figure 2.

Providing a flexible platform for facile integration into existing AFM instrumentation, standard silicon and boron doped diamond (BDD) AFM cantilevers have been modified.

In order to prevent the leakage currents interfering with the Faradaic electrochemical responses in the working electrolytic solutions it is mandatory to insulate the whole AFM-SECM sensor chip except of the small area at the very apex of the tip and the electrical contact area at the end of the sensor (Figure 2a). Prior to the insulation of the Si cantilevers a 5 nm Ti thick adhesion layer followed by a 60 nm thick Au and a further 5 nm Ti thick layer has been sputtered onto the Si cantilever. The Au acts later the electrode and the last Ti layer provides better adhesion between Au and the insulation. The BDD cantilevers have not been modified prior to insulation deposition as the BDD itself acts as an electrochemical sensor. An insulating Si₃N₄ layer has been deposited on both cantilever types by plasma enhanced chemical vapour deposition at 300°C for 50 min corresponding to a film thickness of about 600 nm. The reliability of the insulating layer was determined by linear-sweep voltammetry.

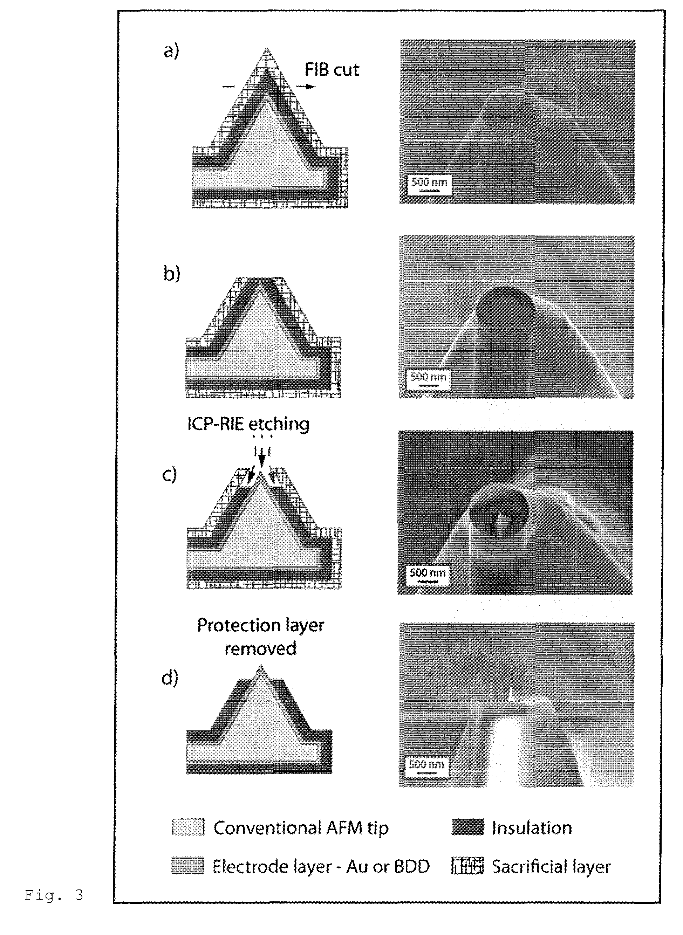

Before the tip formation by FIB cutting and RIE the AFM probes were sputter coated with a 50 nm thick sacrificial chromium layer leading to a sandwich structure (Figure 3a). As it can be seen from the Figure 3b in the next step the Cr and Si₃N₄ layers have been partly removed at the very apex of the AFM tip with the FIB. After this step the conductive tip remains buried underneath the remaining about 150 nm thick Si₃N₄ insulation layer. The FIB cutting was carried out with the crossbeam^{®} 40EsB FIB/SEM system utilizing a beam of Ga⁺ ions at 30 keV and a beam current of 50 pA. The following inductively coupled plasma (ICP)-RIE process is performed in two steps in a Plasmalab System 100 (Oxford Instruments). First, a mixture of SiCl₄ and SF₆ has been used for a removal of the Ga containing top insulation layer. Previous experiments have shown that Ga acts as an etch stop during Si₃N₄ dry etching with SF₆. In the second step solely SF₆ was used to etch the Si₃N₄ isotropically and with high rate exposing the tip, whereby the Cr protects the Si₃N₄ insulation layer on the rest of the cantilever (Figure 3c). The present experiments proved the selective etching with SF₆. The etching rate of the BDD is very slow compared to Si₃N₄ and for Cr and Au almost negligible. By varying the etching time, the length of the exposed, cone shaped electrode can be well controlled (see also: example 2). After the successful exposure of the conductive apex of the tip the protective Cr layer has been removed by wet etching with Microposit chrome etch 18 (Figure 3d).

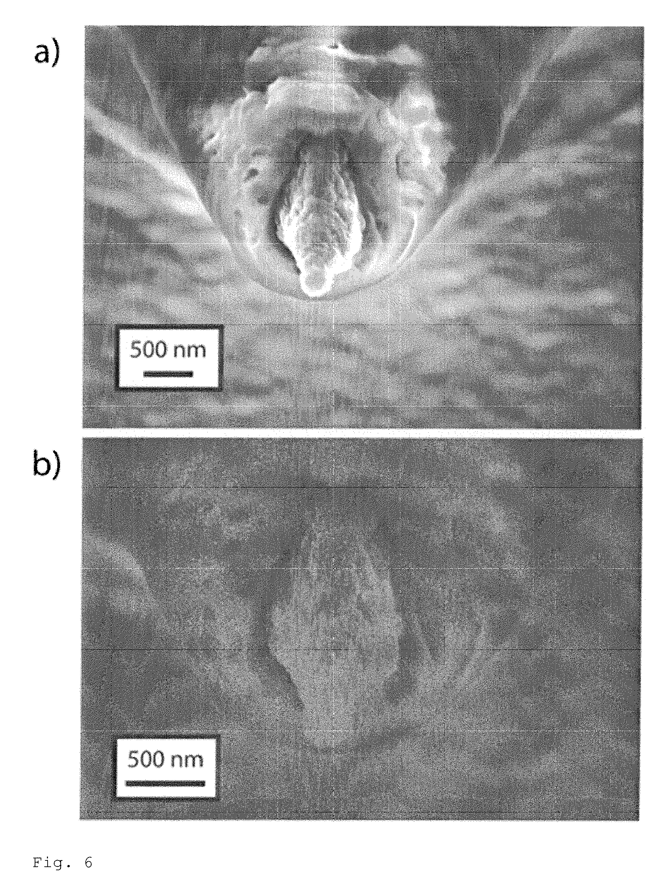

Figure 4 and 6 show the SEM image of the BDD coated AFM-SECM sensor after the previously described fabrication procedure with corresponding energy dispersive x-ray (EDX) spectrum.

The exposed gold or BDD probes were characterized electrochemically. The electrical contact for the integrated electrode was provided by an insulated 0.15 mm-thick copper wire glued with a conducting silver epoxy resin onto the small exposed area of the gold/BDD layer at the end of the cantilever opposite to the tip (see Figure 2a). Although special care was taken during the manual handling of the modified cantilevers, occasional scratching of the silicon nitride layer could not be avoided. Therefore to prevent leakage currents, the cantilever mounts were additionally protected by an insulation varnish applied using a fine microbrush after contacting. Cyclic voltammograms (CVs) of cantilevers were measured in 1 mM solution of a redox probe ferrocenemethanol (FcMeOH) and 0.1M KNO₃ or 0.1 M H₂SO₄ as supporting electrolytes. A custom built bipotentiostat and an Autolab PGSTAT 128N potentiostat (Utrecht, Netherlands) were employed. Pt wire acted as a counter electrode and Ag or Pt wire served as a quasi-reference electrode. The potential of the latter was calibrated with respect to the true reference electrode. For presentation purposes, the data were recalculated to the scale of the standard hydrogen electrode.

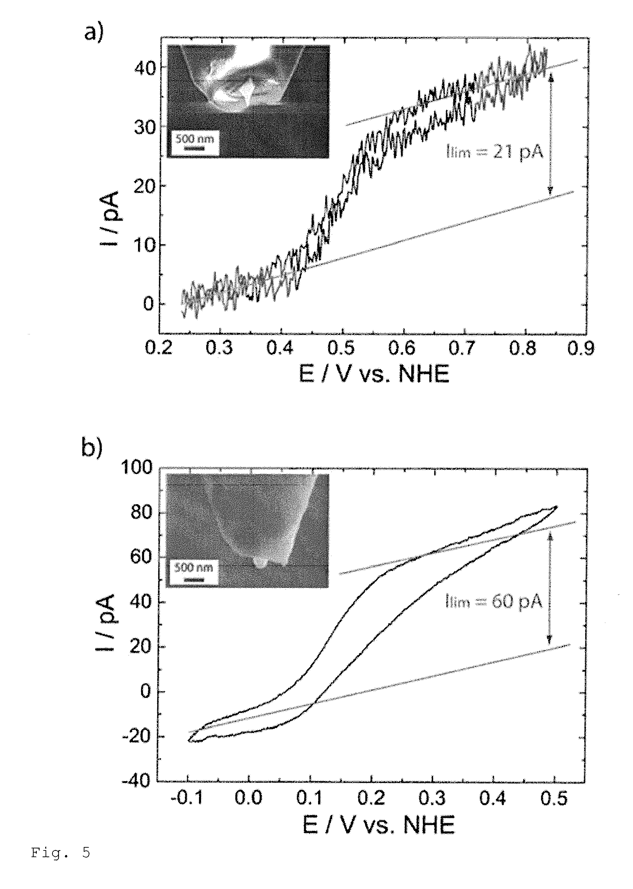

The steady-state CVs of gold-coated probes (Figure 5a) and cone-shaped BDD (Figure 5b) obtained upon potential cycling feature showed well defined S-shaped current waves on top of the linear background. This is a well-known type of current response, corresponding to the oxidation of the redox-probe FcMeOH. The onset of oxidation current appears at E ≈ 0.45 V (Au) and 0.05 V (BDD).

The diffusion-limited value of current is reached at E ≈ 0.60 V (Au) and 0.2 V (BDD). The half-wave potential E_{1/2}, defined as I_{wave}(E_{1/2}) = I_{lim/2}, was found to be equal to 0.50 V (Au) and 0.15 V (BDD). The latter is an intrinsic property of FcMeOH, and its value corresponds to the ones reported for this system before. The value of diffusion-limited current Ilim (21 pA for Au probe and 60pA for BDD probe) is mostly determined by the geometry of the probe. The geometry of the investigated conical probes were analysed from the SEM images. For the characterized Au cone rₜᵢₚ ≈ 150 nm, hₜᵢₚ ≈ 450 nm, r_{g} ≈ 850 nm (inset in Figure 5a) were found. For the characterized BDD cone a tip radius of rₜᵢₚ ≈ 200 nm, a tip height of hₜᵢₚ ≈ 300 nm, and the thickness of the insulating sheath of r_{g} ≈ 700 nm was estimated (inset in Figure 5b). Using previously derived equations for the diffusion-limited current at an ideal conical electrode with insulating sheath, Iₗᵢₘ=84 pA for the Au probe and Iₗᵢₘ=81 pA for the BDD probe was calculated. For Au probe, there is 4 times difference between experimentally measured and calculated current. This difference was attributed to the imperfect shape of the insulated probe, possibly due to the uneven insulation sheath resulting in pronounced "walls" around the conductive probe (inset in Figure 5a). These defects substantially hinder the diffusion of the redox couple to the probe, thus decreasing diffusion-limited current. The experimental limiting current of the BDD probe is about 25% lower than the theoretically calculated value. This is possibly also due to the uneven insulation sheath as observed in the inset in Figure 5b.

This fabrication method is based on standard micro processing techniques which guarantee the reproducible fabrication of the cone shaped SECM electrodes with the nanoscaled resolution. This approach also allows the successful integration of the SECM feature in the conventional AFM probes. Aside of the tip patterning all processes were performed in a batch-alike manner. The FIB employment for the fabrication is significantly reduced compared with the previous works presented (Menozzi et al., Ultramicroscopy 104 (2005), 220-225), thereby decreasing the overall fabrication cost.

### 2.: Reactive Ion Etching

There are two main etching types, wet chemical etching and dry etching. It is used to remove any material that is not protected by a hard mask. The choice of chemicals used for the etching depends on the material to be etched. By the wet etching the samples are immersed in the solutions and the etching occurs isotropic, which means that the etching solution also etches the structures underneath the hard mask through the mask opening. The property of the dry etching is that the highly anisotropic etching profiles can be achieved. Dry etching is divided in three groups: plasma etching, sputter etching and reactive ion etching (RIE). Depending of the requirements on selectivity, damage potential and the anisotropy the respective method will be chosen. The RIE combines both physical and chemical etching to give desired balance between anisotropy, selectivity and damage (Jackson et al. (Eds.), Handbook of Semiconductor technology, 2000).

The RIE process is conducted in two steps. First, a mixture of SiCl₄ and SF₆ is required for the removal of the Ga containing top insulation layer (Ga implantation during the FIB cut). Previous experiments have shown that Ga in the top layer of the Si₃N₄ acts as an etch stop during Si₃N₄ dry etching with SF₆. In the second step solely SF₆ was used to etch the Si₃N₄ isotropically. The parameters used for the reactive ion etching are:

| | | **Step 1** | **Step 2** |
|---|---|---|---|
| **Radio Frequency (RF) Power** | | 50 W | 10 W |
| **Inductively Coupled Plasma (ICP) Power** | | 50 W | 100 W |
| **Pressure** | | 15 mTorr | 20 mTorr |
| **Gas flow** | **sulfur hexafluoride (SF₆)** | 10 sccm | 40 sccm |
| | **silicon tetrachloride (SiCl₄)** | 20 sccm | 0 sccm |
| **Table temperature** | | 35°C | 35°C |
| **Etch rate** | | 10 nm/min | 35 nm/min |

The etch rates were determined on a reference probe. By a time varying, the etching depth can be controlled.

The pressure, gas flow, gas mixture, RF power and the ICP power can be altered in order to change the etching properties. For example, the lower RF power, higher ICP power and higher pressure lead to more isotropic etching. Exact combinations for the desired etching properties can be determined experimentally by usual optimisation experiments.

The etching process stops almost immediately after the given etching time runs out and no additional treatments are required afterwards. This methodology therefore allows an exact production of the devices according to the present invention which can also be established for the mass production of a large number of devices. Specifically to the ring electrodes according to the present invention, this method turned out to be specifically advantageous because of the controllability of this method and the possibility to provide predetermined dimensions of the tip architecture, especially with respect to the free space between the outer protection layer and the inner conductive layer (the conductive AFM tip) forming the ring electrode (e.g. Fig. 4).

## Claims

1. An atomic force microscopy-scanning electrochemical microscopy (AFM-SECM) sensor comprising
- an AFM tip on an AFM cantilever,
- with a conductive layer on the AFM tip which forms a conductive AFM tip and wherein said conductive tip is connected to a contact region on the cantilever, said contact region providing the contact site for delivering the measurement signal from the conductive AFM tip to the AFM microscope,
- wherein said conductive layer is covered by an insulating layer except for the immediate tip and the contact region,
- wherein said insulating layer is covered by a conductive protection layer, and
- wherein, due to a cavity between the conductive protection layer and the conductive AFM tip, said cavity being formed by the absence or by removal of a tip located portion of the insulating layer, the region of the conductive AFM tip forms a ring electrode with the conductive protection layer.

2. AFM-SECM sensor according to claim 1, **characterised in that** a cavity is located between said conductive AFM tip and said conductive protection layer wherein said conductive AFM tip and said conductive protection layer are not separated by said insulating layer within a region of 30 nm to 3.5 µm from the immediate tip.

3. An atomic force microscopy-scanning electrochemical microscopy (AFM-SECM) sensor comprising
- an AFM tip on an AFM cantilever,
- with a conductive layer on the AFM tip which forms a conductive AFM tip and wherein said conductive tip is connected to a contact region on the cantilever, said contact region providing the contact site for delivering the measurement signal from the conductive AFM tip to the AFM microscope,
- wherein said conductive layer is covered by an insulating layer except for the immediate tip and the contact site.

4. AFM-SECM sensor according to claim 1, **characterised in that** the distance between said conductive AFM tip and said conductive protection layer is from 5 nm to 2 µm.

5. AFM-SECM sensor according to any one of claims 1 to 4, **characterised in that** said conductive protection layer is Cr, Ni, Au, Pt, Ag, Cu, doped diamond, doped Ge, doped Si, Al, SiO₂, Si₃N₄, Al₂O₃, HfO₂, ZrO₂, glass, electrophoretic paint or TiO₂.

6. AFM-SECM sensor according to any one of claims 1 to 5, **characterised in that** the immediate tip is a region of 20 nm to 3 µm in the vertical extension of the sensor.

7. AFM-SECM sensor according to any one of claims 1 to 6, **characterised in that** the insulating layer has a thickness of 5 nm to 2 µm.

8. AFM-SECM sensor according to any one of claims 1 to 7, **characterised in that** said insulating layer comprises SiO₂, Si₃N₄, diamond, Si-undoped, Ge-undoped, Al₂O₃, HfO₂, ZrO₂, glass, synthetic non-conductive oxide- or nitride layer material , electrophoretic paint or TiO₂, especially Si₃N₄.

9. AFM-SECM sensor according to any one of claims 1, 2 and 4 to 7, **characterised in that** said cavity has a vertical extension of 20 nm to 3 µm.

10. A method for the production of an AFM-SECM sensor according to any one of claims 1 to 9, **characterised by** the following steps:
- providing an AFM cantilever with an AFM tip,
- covering the AFM cantilever with an AFM tip with a conductive layer at least to the extent that a conductive AFM tip and a contact site are connected,
- covering the AFM cantilever with an AFM tip covered with the conductive layer with an insulating layer except for the immediate tip and the contact site,
- covering the insulating layer with a protection layer, preferably a conductive protection layer,
- removing the insulating layer and the protection layer from the apex of the AFM tip,
- selectively removing a portion of the insulating layer at the immediate tip, and
- optionally removing the protection layer.

11. Method according to claim 10, **characterised in that** the selectively removing a portion of the insulating layer at the immediate tip is performed by etching, especially by reactive ion etching (RIE).

12. Method according to claim 10 or 11, **characterised in that** removing a portion the insulating layer and the conductive protection layer from the apex of the AFM tip is performed by focused ion beam (FIB) cutting.

13. Method according to any one of claims 10 to 12, **characterised in that** said conductive layer on the AFM tip which forms a conductive AFM tip comprises boron-doped diamond or Au.

14. Method according to any one of claims 10 to 13, **characterised in that** an adhesion layer is provided between the cantilever and the conductive layer and/or between the conductive layer and the insulating layer and/or between the insulating layer and the protection layer.

15. Method according to claim 14, **characterised in that** the adhesion layer comprises Ti or Cr.
